# FASCICULE DE BREVET EUROPEEN

(11) **EP 1 089 411 B1**
(45) Date de publication et mention de la délivrance du brevet: **25.11.2009**
(21) Numéro de dépôt: 00402605.0
(22) Date de dépôt: 20.09.2000
(51) Int. Cl.: H02G 3/08

(54) **Dispositif destiné à être traversé de façon étanche par un corps cylindrique, boîte pour appareillage électrique et procédé l'utilisant**
Vorrichtung bestimmt zur abgedichten Durchbohrung mit einem zylindrischen Objekt, Dose für ein elektrisches Gerät und Verfahren dafür
Device intended to be pierced by a cylindrical object in a sealed condition, box for electrical apparatus and a process using these

(30) Priorité: 28.09.1999 FR 9912062
(43) Date de publication de la demande: 04.04.2001
(73) Titulaire: Legrand France, 87000 Limoges (FR); Legrand SNC, 87000 Limoges (FR)
(72) Inventeur: Dunouhaud, Gérard, 87260 Saint Paul (FR)
(74) Mandataire: Santarelli

(56) Documents cités:
- FR-A- 1 307 295
- FR-A- 1 388 822
- FR-A- 2 689 331
- FR-A- 2 710 790

## Description

La présente invention concerne d'une façon générale le passage d'un corps cylindrique tel qu'un câble électrique d'un espace à un autre de façon étanche.

On sait que dans le cas où l'un des espaces est l'intérieur d'une boîte pour appareillage électrique et l'autre espace est l'extérieur de cette boîte, il est possible de mettre en oeuvre un tel passage grâce à un embout en matière plastique rapporté sur une ouverture ménagée dans une cloison de la boîte.

On connaît notamment par le brevet français 2 150 580 un tel embout comportant une embase annulaire de fixation sur le pourtour de l'ouverture ménagée dans la cloison de la boîte et une paroi de fermeture de ladite embase. Cette paroi de fermeture présente une série d'anneaux coaxiaux de diamètres décroissants, chacun des anneaux étant en saillie et en porte-à-faux par rapport à l'anneau qui l'entoure. L'extrémité libre de chacun des anneaux (extrémité non reliée à un anneau voisin) est déportée transversalement vers l'axe de l'embout, le déport de l'extrémité libre d'un anneau résultant de ce que l'anneau est tronconique. Le déport constitue un rétrécissement interne que doit franchir le câble engagé dans l'embout, ce rétrécissement assurant l'étanchéité recherchée. L'un quelconque de ces anneaux est sélectionné par l'installateur en fonction du diamètre du câble à monter dans l'embout, l'utilisateur coupant à l'aide d'un outil la portion de l'embout raccordant l'anneau sélectionné et l'anneau que celui-ci entoure, éliminant ainsi les anneaux et la partie de la paroi correspondante situés à l'intérieur de l'anneau sélectionné.

Le brevet français 1 388 822 décrit aussi un tel embout qui comporte également une portion annulaire à profil tronconique qui s'étend depuis la paroi interne de l'embase au niveau de l'une de ses extrémités, un opercule transversal qui ferme ladite portion annulaire et une tige dont la base est solidaire de la partie centrale dudit opercule et qui s'étend vers l'extérieur de l'embout. L'opercule comporte en outre une série de zones annulaires concentriques à épaisseur réduite permettant son découpage par anneaux successifs lors de l'introduction d'un câble électrique, après le décapsulage préalable de la portion centrale de cet opercule par arrachement de la tirette.

Le brevet français 2 710 790 décrit également un tel embout comportant une bague de fixation sur le pourtour de l'ouverture ménagée dans la cloison de la boîte et un élément circulaire plat de fermeture. L'élément de fermeture comporte une zone annulaire à épaisseur réduite (gorge) permettant le détachement ou l'arrachement de la partie centrale de cet élément en vue de l'introduction d'un câble électrique dans l'ouverture ainsi créée.

L'invention vise à permettre le passage d'un corps d'un espace à l'autre avec des performances comparables, notamment en matière d'étanchéité, mais de façon plus simple et plus commode pour l'utilisateur.

L'invention propose à cet effet, sous un premier aspect, un dispositif destiné à être traversé de façon étanche, entre un premier espace et un deuxième espace, par un corps cylindrique de diamètre supérieur à un diamètre prédéterminé, **caractérisé en ce qu**'il comporte une paroi :
- admettant en l'absence dudit corps, une position de repos où elle est globalement plate et où elle présente :
   - une zone d'introduction ayant ledit diamètre prédéterminé,
   - un bourrelet annulaire entourant ladite zone d'introduction, et
   - une portion crénelée entourant ledit bourrelet annulaire, présentant du côté du premier espace des redents séparés par des créneaux orientés radialement par rapport à ladite zone d'introduction et délimités à une extrémité par une surface du bourrelet, ladite paroi étant moins épaisse au niveau des créneaux qu'au niveau des redents et du bourrelet ; et
- adaptée à être déformée élastiquement de ladite position de repos à une position de travail où ladite portion crénelée est globalement tronconique, lorsque ledit corps est introduit au travers de ladite paroi par ladite zone d'introduction.

Pour mettre en place le corps dans le dispositif, il suffit à l'utilisateur d'introduire le corps dans la zone d'introduction, la paroi passant alors de sa position de repos à sa position de travail.

L'élasticité du bourrelet annulaire qui entoure la zone d'introduction permet à ce bourrelet d'enserrer étroitement ledit corps, et donc d'être en contact étanche avec lui.

La portion crénelée qui entoure le bourrelet annulaire a tout à la fois la capacité de déformation nécessaire pour accepter l'expansion de sa limite interne due à l'introduction du corps et la rigidité voulue pour éviter l'ovalisation du bourrelet sous l'effet des efforts radiaux que le corps est susceptible de lui appliquer, ovalisation qu'il faut éviter puisqu'elle créerait des lacunes de contact entre le bourrelet et le corps dont il résulterait un défaut d'étanchéité.

La capacité de se déformer est offerte par la plus faible épaisseur de la paroi au niveau des créneaux, alors que la rigidité est donnée au niveau des redents, plus épais, de sorte que la paroi ne peut pratiquement pas s'y déformer.

La paroi du dispositif selon l'invention est ainsi capable de recevoir, tout en assurant l'étanchéité requise, des corps dont le diamètre est compris dans une plage relativement large, par exemple de 8 mm à 14 mm, sans requérir une opération de choix par l'utilisateur, dont la tâche est en conséquence plus aisée qu'avec l'embout susmentionné.

Selon des caractéristiques préférées, ledit bourrelet est délimité latéralement, du côté interne, au moins sur une partie de son épaisseur, par une surface annulaire continue ayant ledit diamètre prédéterminé.

Cette surface annulaire continue est en effet favorable à la qualité du contact entre le bourrelet et le corps.

Selon d'autres caractéristiques préférées, pour des raisons de commodité de fabrication ou d'emploi et de qualité des résultats obtenus :
- chaque dit redent est délimité latéralement du côté externe, au moins sur une partie de son épaisseur, par une surface incurvée coaxiale à ladite zone d'introduction ;
- dans la position de repos, les surfaces mutuellement en regard de deux redents voisins, qui délimitent latéralement un créneau, sont parallèles à une même direction radiale ;
- lesdits créneaux sont plus étroits que lesdits redents ;
- le dispositif comporte six créneaux ;
- la surface dudit bourrelet et la surface de chaque dit redent qui regardent ledit premier espace, se prolongent mutuellement ; et/ou
- ledit bourrelet comporte, du côté du deuxième espace, une nervure annulaire coaxiale à ladite zone d'introduction.

Selon d'autres caractéristiques préférées, ladite paroi comporte en outre une portion charnière entourant ladite portion crénelée et entourée par le reste dudit dispositif.

La paroi peut ainsi coopérer dans les meilleures conditions avec le reste du dispositif.

Selon d'autres caractéristiques préférées, pour des raisons de simplicité, de commodité de fabrication et de qualité des résultats obtenus :
- la surface de ladite portion charnière qui regarde le premier espace est en retrait par rapport à la surface que comporte chaque redent en regard du premier espace ;
- la surface de ladite portion charnière et la surface de chaque dit créneau qui regardent le premier espace, se prolongent mutuellement ; et/ou
- ladite paroi comporte, du côté du deuxième espace une nervure annulaire située à la jonction entre ladite portion crénelée et ladite portion charnière.

Selon d'autres caractéristiques préférées, ladite zone d'introduction comporte un opercule défonçable.

Il est ainsi possible de disposer d'une zone d'introduction qui est fermée, mais que l'utilisateur peut aisément ouvrir, en défonçant l'opercule, en particulier directement avec le corps qui est à mettre en place dans la zone d'introduction.

On observera qu'on évite ainsi à l'utilisateur de devoir utiliser un outil pour former une ouverture d'introduction du corps, contrairement à l'embout antérieur susmentionné qui exige de l'utilisateur d'utiliser un outil de découpe.

De préférence, ledit opercule est relié par une zone frangible à un bourrelet que comporte ladite paroi.

L'opercule est bien entendu défoncé par rupture de la zone frangible.

Une fois cette rupture effectuée, le bourrelet entoure un orifice au travers duquel le corps va pouvoir être introduit, le bourrelet assurant le cas échéant un contact étanche avec le corps.

De préférence, ledit opercule et ledit bourrelet auquel il est relié par une zone frangible, délimitent conjointement, du côté du deuxième espace, un creux en forme de cuvette.

Ce creux facilite le guidage du corps et la rupture de la zone frangible lors de l'introduction du corps.

Selon des caractéristiques préférées, pour des raisons de commodité de réalisation et de qualité des résultats obtenus, ledit opercule est en saillie par rapport audit bourrelet, du côté du premier espace.

Dans un premier mode de réalisation préféré, ledit bourrelet entourant ladite zone d'introduction, dit premier bourrelet, est distinct dudit bourrelet auquel est relié ledit opercule par une zone frangible, dit deuxième bourrelet, ladite paroi comportant une portion intermédiaire entre lesdits premier et deuxième bourrelets.

Dans ce mode de réalisation, la paroi du dispositif selon l'invention permet le passage étanche de corps dont le diamètre se trouve dans une plage particulièrement étendue, qui comporte également des diamètres compris entre le diamètre de la zone d'introduction et le diamètre interne du deuxième bourrelet.

Selon des caractéristiques préférées de ce premier mode de réalisation, ledit deuxième bourrelet est délimité latéralement, du côté interne, par une surface annulaire continue ayant un deuxième diamètre prédéterminé, plus petit que ledit diamètre prédéterminé de ladite zone d'introduction.

La présence de cette surface annulaire continue est favorable à la qualité du contact entre le deuxième bourrelet et le corps qu'il entoure.

De préférence, pour favoriser le bon fonctionnement du dispositif, la surface de ladite portion intermédiaire qui regarde le premier espace est tout entière en retrait par rapport à la surface du premier bourrelet et par rapport à la surface du deuxième bourrelet qui regardent le premier espace.

De préférence, alternativement, pour les mêmes raisons mais dans le cas où les risques d'ovalisation du deuxième bourrelet par le corps qui l'entoure sont élevés, ladite portion intermédiaire présente du côté du premier espace, des redents séparés par des créneaux orientés radialement par rapport à ladite zone d'introduction et délimités à une extrémité par une surface du deuxième bourrelet et à une autre extrémité par une surface du premier bourrelet, ladite portion intermédiaire étant moins épaisse au niveau de ses créneaux qu'au niveau de ses redents et du deuxième bourrelet.

De préférence, pour des raisons de commodité de fabrication et de qualité du fonctionnement obtenu, lesdits créneaux de ladite portion crénelée et lesdits créneaux de la portion intermédiaire, sont alignés.

Selon d'autres caractéristiques préférées, ladite portion intermédiaire comporte, du côté du deuxième espace, un épaulement annulaire situé à la jonction avec le premier bourrelet.

La nette différence d'épaisseur que présente dans la paroi au niveau de l'épaulement offre l'avantage d'arrêter la propagation d'une éventuelle déchirure de la portion intermédiaire susceptible de se produire lorsque le corps introduit dans le deuxième bourrelet a un diamètre au moins égal à celui du diamètre de la zone d'introduction, c'est-à-dire un diamètre largement supérieur à celui du deuxième bourrelet.

Dans un deuxième mode de réalisation préféré, ledit bourrelet entourant ladite zone d'introduction est celui auquel est relié ledit opercule par une zone frangible.

La zone d'introduction est ainsi tout entière obturée par l'opercule défonçable, ce qui est avantageusement mis en oeuvre dans les cas où le diamètre de la zone d'introduction est relativement faible.

Selon des caractéristiques préférées favorables au bon fonctionnement du dispositif :
- ladite portion crénelée présente un épaulement annulaire du côté du deuxième espace ; et/ou
- ladite portion crénelée présente une nervure annulaire du côté du deuxième espace.

Selon d'autres caractéristiques préférées, ledit dispositif comporte autour de ladite paroi une bague plate à laquelle se raccorde, du côté du premier espace, une jupe tronconique, ladite paroi se raccordant à ladite bague par une zone périphérique d'une portion charnière qui est plus mince que ladite bague.

Grâce à ces caractéristiques, le dispositif selon l'invention permet également le passage de corps dont le diamètre correspond sensiblement à celui de la paroi, qui est alors enlevée du dispositif par rupture au niveau de la portion charnière, la jupe entrant en contact étanche avec le corps.

Le cas échéant, si la portion charnière est suffisamment mince pour être frangible, l'enlèvement de la paroi peut s'effectuer directement en forçant avec le bout du corps sur la paroi.

Selon des caractéristiques préférées permettant d'utiliser la partie du dispositif se trouvant autour de la paroi d'une façon similaire à l'embout susmentionné :
- ladite bague se raccorde à un manchon de fixation adapté à être encliqueté au travers d'une ouverture d'une cloison séparant lesdits premier et deuxième espaces ;
- le dispositif comporte une rainure située du côté externe, à la jonction entre la bague et le manchon ;
- ledit manchon présente une surface interne cylindrique munie d'un bourrelet annulaire saillant ; et/ou
- ledit manchon comporte du côté externe, une rainure adaptée à recevoir une portion de ladite cloison située autour de ladite ouverture.

Enfin, selon d'autres caractéristiques préférées, qui sont particulièrement avantageuses en matière de fabrication, le dispositif est en matière plastique moulée d'une seule pièce.

L'invention vise également, sous un deuxième aspect, une boîte pour appareillage électrique, munie d'au moins un dispositif tel qu'exposé ci-dessus.

L'invention vise enfin, sous un troisième aspect, un procédé pour traverser de façon étanche une cloison séparant un premier et un deuxième espaces avec un corps cylindrique de diamètre supérieur à un diamètre prédéterminé, suivant lequel on munit ladite cloison d'un dispositif tel qu'exposé ci-dessus et on met en place ledit corps au travers de la paroi de ce dispositif par sa zone d'introduction.

Selon des caractéristiques préférées de ce procédé, on met en place ledit corps en l'enfonçant dudit deuxième espace vers ledit premier espace jusqu'à avoir fait coulisser la longueur voulue au travers de ladite paroi, puis en tirant en sens inverse jusqu'à avoir inversé la conicité de la portion crénelée.

La partie de la paroi qui entoure le corps est ainsi en saillie du côté du deuxième espace, et non en creux.

Cela offre l'avantage, dans le cas où le deuxième espace est susceptible de contenir des impuretés ou de l'humidité voire de la pluie, d'éviter que les impuretés ou l'humidité soient recueillies dans le creux se trouvant autour du corps.

Selon d'autres caractéristiques préférées, ce procédé est mis en oeuvre avec ledit corps cylindrique qui est un câble électrique.

Ce procédé convient en effet particulièrement bien pour les corps de ce type.

L'exposé de l'invention sera maintenant poursuivi par la description d'exemples de réalisation de l'invention, donnée ci-après, à titre illustratif et non limitatif, à l'appui des dessins annexés. Sur ceux-ci :
- la figure 1 est une vue en perspective, d'un embout pour boîte d'appareillage électrique conforme à l'invention prise depuis le côté correspondant à l'intérieur de la boîte ;
- la figure 2 est une vue en coupe transversale repérée par II-II sur la figure 1 ;
- la figure 3 est une vue identique à celle de la figure 2, l'embout étant monté dans une ouverture d'une boîte pour appareillage électrique ;
- la figure 4 est une vue en coupe transversale analogue à celle de la figure 2, l'embout recevant dans sa bague un câble électrique ou un tube de diamètre relativement important, avec lequel la jupe est en contact ;
- la figure 5 est une vue en coupe transversale analogue à la figure 2, où la paroi de l'embout, en position de travail, reçoit un câble électrique de plus petit diamètre ;
- la figure 6 est une vue en coupe transversale analogue à la figure 5, mais où la paroi de l'embout est retournée ;
- la figure 7 est une vue en coupe transversale analogue à la figure 2, où la paroi de l'embout reçoit un câble électrique de diamètre encore plus petit ;
- la figure 8 est une vue en coupe transversale analogue à la figure 7, mais où la paroi située autour de ce câble électrique est retournée ;
- les figures 9 et 10 sont des vues analogues aux figures 1 et 2, mais pour une variante de réalisation de l'embout ; et
- les figures 11 et 12 sont également des vues similaires aux figures 1 et 2, pour une autre variante de réalisation.

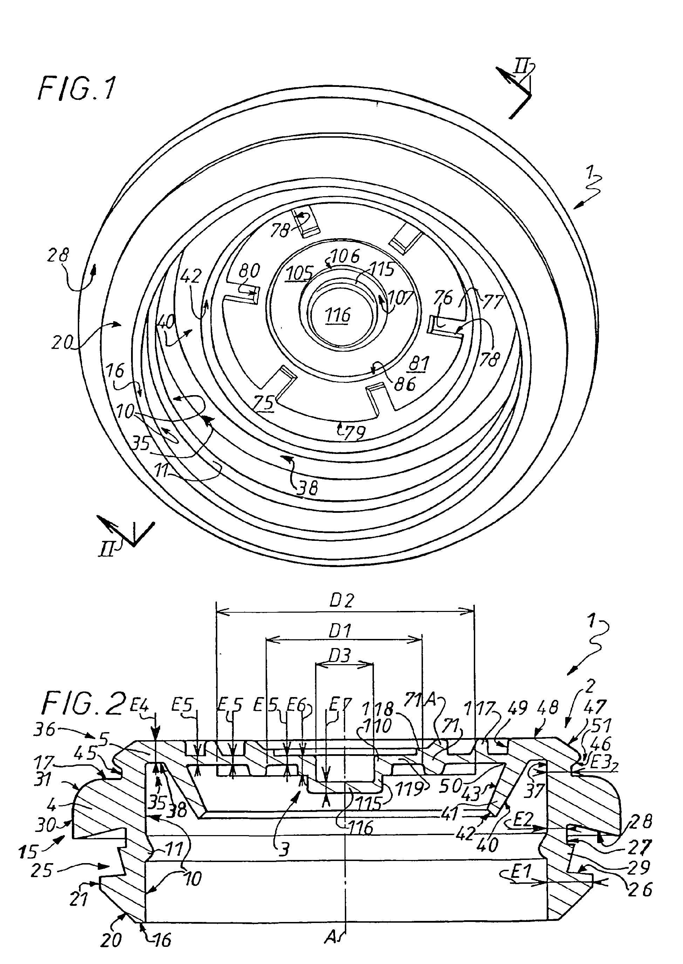

L'embout 1, montré notamment sur les figures 1 et 2, comporte une embase 2 de révolution autour d'un axe central A et une paroi 3 transversale à cet axe.

L'embase est constituée d'un manchon tubulaire 4 et d'une bague plate 5.

Le manchon 4 présente une surface latérale interne 10 cylindrique et lisse, avec un bourrelet annulaire saillant 11 ménagé sur cette surface 10, une face latérale externe 15 en creux et relief, et deux faces respectives d'extrémité 16 et 17 plates et orientées transversalement à l'axe central A de l'embout 1.

Au raccordement de la face 16 et de la face 15, le manchon 4 comporte un chanfrein 20 dans le prolongement duquel se trouve une surface cylindrique 21 parallèle à la surface 10 dont elle est distante d'une épaisseur E1. La surface 21 donne sur une rainure 25 qui comporte une surface latérale 26 en dépouille, un fond 27 et une surface latérale 28 en contre-dépouille. Le fond 27 présente une saillie 29 ayant une surface inclinée vers l'intérieur et vers la surface 26, à laquelle elle se raccorde, et une surface droite, située sensiblement en face du sommet du bourrelet annulaire 11, le reste de la surface de fond 27, qui va de la surface droite à la surface 28, étant cylindrique et lisse et distant de la surface 10 d'une épaisseur E2, la surface 28 se raccordant, à l'opposé du fond 27, à une surface cylindrique 30 parallèle à la surface 10 et s'étendant jusqu'à un congé 31 de raccordement avec la face d'extrémité 17.

La bague plate 5 comporte une face interne 35 et une face externe 36, la face 35 comprenant une surface cylindrique 37 prolongeant la surface 10 et une surface de fond 38 transversale à l'axe A, la surface 38 se raccordant, à l'opposé de la surface 37, à la surface externe 40 d'une jupe tronconique 41 en dépouille par rapport au manchon 4.

La jupe 41 est déportée transversalement à l'axe A, c'est-à-dire qu'elle est inclinée vers la face 16 et vers l'axe A, l'extrémité libre 42 de la jupe 41 étant en dépouille vers la face interne 43 de cette jupe, la surface 43 étant elle-même en contre-dépouille.

La face externe 36 de la bague 5 présente une surface externe cylindrique 45 se raccordant transversalement à la surface d'extrémité 17 du manchon 4, la surface 45 étant distante de la surface 37 d'une épaisseur E3. La surface 45 se raccorde, à l'opposé de la surface 17, à une surface 46 inclinée vers l'extérieur et vers l'opposé de la surface 17. La surface 46 se raccorde, à l'opposé de la surface 45, à une surface 47, inclinée vers l'intérieur et vers l'opposé de la surface 17, les surfaces 46 et 47 se raccordant plus précisément par un congé. La surface 47 se raccorde, à l'opposé de la surface 46, à une surface frontale 48 parallèle à la surface de fond 38, dont elle est distante de l'épaisseur E4. La surface 48 se raccorde, à l'opposé de la surface 47, à une surface 49 parallèle à la surface 37. Le raccordement entre la paroi 3 et la bague 5 se fait entre la surface 49 et l'extrémité 50 de la surface 43 que l'on voit en haut sur la figure 2, la surface 49 et l'extrémité 50 ayant sensiblement le même diamètre.

On observera que les surfaces 17, 45 et 46 délimitent une rainure 51 de section sensiblement trapézoïdale qui sert de guide pour un outil de découpe servant, comme expliqué ci-après, à sectionner la matière réalisant la jonction entre le manchon 4 et la bague 5.

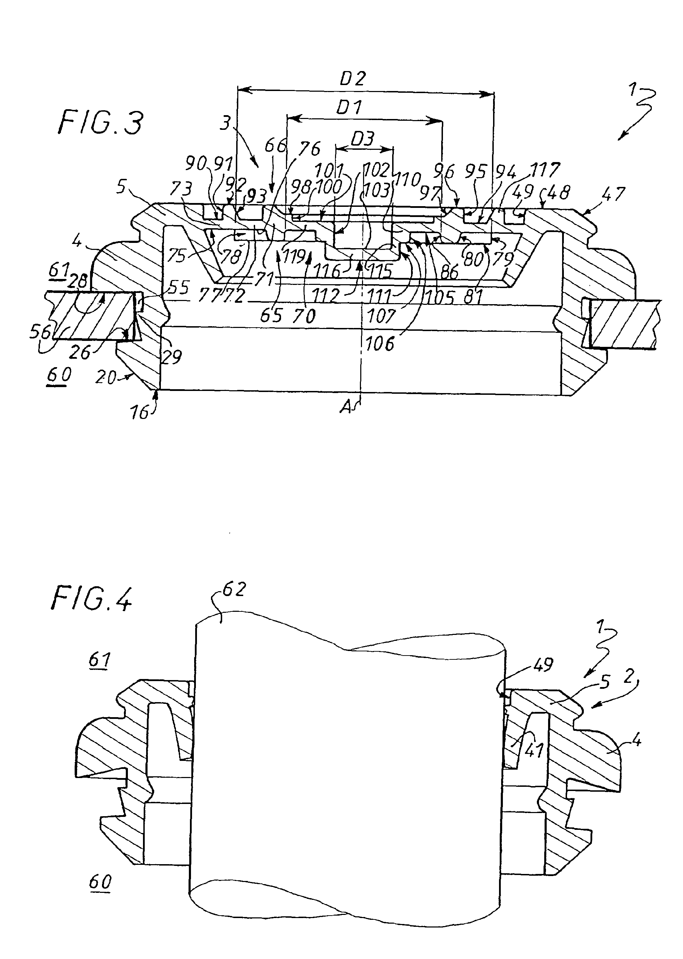

L'embout 1 est prévu pour être installé dans une boîte pour appareillage électrique qui comporte, comme on le voit sur la figure 3, une ouverture 55 ménagée dans une cloison 56, l'espace 60 que l'on voit en-dessous de la cloison 56 sur la figure 3, étant l'espace intérieur à la boîte pour appareillage électrique tandis que l'espace 61, que l'on voit au-dessus de la cloison 56, est l'espace extérieur à cette boîte.

Pour mettre en place l'embout 1, on le présente dans l'espace 61 avec sa surface 16 en regard de la cloison 56, coaxialement à l'ouverture 55. On pousse l'embout 1 contre la cloison 56, avec laquelle le chanfrein 20 entre en contact. L'embout 1, qui est réalisé en matière plastique relativement souple, se déforme alors pour permettre son enfoncement jusqu'à ce que la surface 28 vienne contre la cloison 56, la déformation étant favorisée par le fait que l'épaisseur E2 est, dans l'exemple représenté, de l'ordre de la moitié de l'épaisseur E1. La portion de l'embout 1 qui s'était comprimée pour passer au travers de l'ouverture 55 se détend après avoir franchi la cloison 56 de sorte que la surface 26 se retrouve également contre la cloison 56, à l'opposé de la surface 28. La portion de la cloison 56 entourant l'ouverture 55 étant alors engagée dans la rainure 25, avec la saillie 29 qui s'applique fortement sur le pourtour de l'ouverture 55 et les surfaces 26 et 28 qui sont appliquées sur les surfaces opposées de la cloison 56, de sorte que l'embout 1 et la cloison 56 sont en contact étanche l'un avec l'autre.

L'embout 1 est également prévu pour recevoir un câble électrique ou un tube pour un tel câble, câble ou tube dont une portion d'extrémité doit se trouver à l'intérieur de la boîte pour appareillage électrique, avec le contact entre ce tube ou câble et l'embout 1 qui est également étanche, afin d'assurer globalement l'étanchéité de la boîte pour appareillage électrique vis-à-vis de l'extérieur au niveau de l'embout 1.

Lorsque le tube ou câble que doit recevoir l'embout 1 est d'un diamètre relativement important, c'est-à-dire légèrement supérieur au diamètre interne du bourrelet 11 (ici, un tube ou câble de l'ordre de 20 mm), on ne garde de l'embout 1 que le manchon 4, en séparant ce dernier du reste de l'embout par une découpe que l'on pratique au niveau de la rainure 51, qui sert de guide à l'outil de découpe, le tube ou câble étant engagé après l'opération de découpe au centre du manchon 4, le bourrelet 11, qui vient en contact intime avec le tube ou câble, fournissant l'étanchéité recherchée.

Lorsque le tube ou câble est d'un diamètre un peu moins important, compris d'une façon générale entre le diamètre de l'extrémité 50 de la surface 43 et celui de l'autre extrémité de cette surface (ici, entre 16 et 14 mm), on ne garde de l'embout 1 que l'embase 2 formée par le manchon 4 et par la bague 5, la paroi 3 étant enlevée.

On a représenté sur la figure 4 l'embout 1 dans lequel est mis en place un tel tube 62, disposé à l'intérieur de la jupe 41, celle-ci s'appliquant intimement sur le câble et fournissant l'étanchéité voulue.

Lorsque le tube ou câble que doit recevoir l'embout 1 est de diamètre plus petit, on lui fait traverser la paroi 3, que l'on va maintenant décrire en détail.

Cette paroi présente une face 65 en regard de l'espace 60 et une face 66 en regard de l'espace 61, la face 65 se raccordant en périphérie à l'extrémité 50 de la surface 43 de la jupe 41 tandis que la face 66 se raccorde en périphérie à la surface cylindrique 49 de la bague 5.

De façon générale, la paroi 3 comporte en son centre une zone d'introduction 70 de diamètre D1 (ici 8 mm), un bourrelet 71 qui entoure la zone 70, une portion crénelée 72, de diamètre externe D2, qui entoure le bourrelet 71 et une portion charnière 73 qui entoure la portion 72, la paroi 3 se raccordant à l'embase 2 par la portion 73.

La paroi 3 comporte du côté de l'espace 60, une surface plane 75 qui se trouve partiellement dans la portion charnière 73 et partiellement dans la portion crénelée 72, cette dernière comportant des créneaux 76 séparés par des redents 77, les créneaux 76 étant orientés radialement par rapport à l'axe A et étant plus étroits que les redents 77, les créneaux 76 et les redents 77 étant ici chacun au nombre de six.

Le fond des créneaux 76 est formé par la surface 75, qui est plane sur toute son étendue, ainsi qu'on le voit notamment sur la figure 4, la délimitation latérale des créneaux 76 étant formée par des surfaces 78 qui sont planes, les redents 77 étant quant à eux délimités du côté externe par une surface 79 en arc de cercle de diamètre D2, les redents et les créneaux étant délimités du côté interne par le bourrelet 71 qui présente, pour chaque créneau 76, une surface 80 qui forme l'extrémité interne de ce créneau, le bourrelet 71 et les redents 77 étant délimités en regard de l'espace 60 par une surface plane 81, le bourrelet 71 étant délimité du côté interne par une surface cylindrique 86 de diamètre D1.

On va maintenant décrire les surfaces qui délimitent le bourrelet 71, la portion crénelée 72 et la portion charnière 73 du côté de l'espace 61, ainsi que les surfaces de la paroi 3 qui se trouvent du côté de l'espace 61, entre le bourrelet 71 et le centre de la paroi 3.

De ce côté, la paroi 3 comporte, à partir de sa périphérie qui se raccorde à la surface 49, une surface 90 transversale à l'axe A. Cette surface 90 se raccorde, à l'opposé de la surface 49, à une surface cylindrique 91 parallèle à l'axe A. La surface 91 se raccorde, à l'opposé de la surface 90, à une surface 92 d'orientation générale transversale à l'axe A et effleurant la surface 48. La surface 92 se raccorde, à l'opposé de la surface 91, à une surface tronconique 93 inclinée vers l'opposé de la surface 92 et vers l'axe A. La surface 93 se raccorde, à l'opposé de la surface 92, à une surface 94 orientée transversalement à l'axe A, les surfaces 90 et 94 étant alignées. La surface 94 se raccorde, à l'opposé de la surface 93, à une surface cylindrique 95 parallèle à l'axe A. La surface 95 se raccorde, à l'opposé de la surface 94, à une surface 96 d'orientation générale transversale à l'axe A. La surface 96 se raccorde, à l'opposé de la surface 95, à une surface tronconique 97 orientée vers l'opposé de la surface 96 et vers l'axe A. La surface 97 se raccorde, à l'opposé de la surface 96, à une surface 98 transversale à l'axe A. La surface 98 se raccorde, à l'opposé de la surface 97, à une surface cylindrique 100 parallèle à l'axe A. La surface 100 se raccorde, à l'opposé de la surface 98, à une surface 101 transversale qui se raccorde, à l'opposé de la surface 100, à une surface cylindrique 102 de diamètre D3 parallèle à l'axe A, la surface 102 se raccordant, à l'opposé de la surface 101, à une surface 103 orientée transversalement à l'axe A, située au centre de l'embout 1.

On va maintenant décrire les surfaces de la paroi 3 qui se trouvent du côté de l'espace 60 entre le bourrelet 71 et le centre de la paroi 3.

La surface 86, à l'opposé de la surface 81, se raccorde à une surface 105 orientée transversalement à l'axe A. La surface 105 se raccorde, à l'opposé de la surface 86, à une surface cylindrique 106 se raccordant, à l'opposé de la surface 105, à une surface 107 transversale à l'axe A. La surface 107 se raccorde, à l'opposé de la surface 106, à une surface cylindrique 111 se raccordant, à l'opposé de la surface 107, à une surface 112 transversale à l'axe A, située au centre de l'embout 1.

On observera que les surfaces 90, 94 et 101 sont coplanaires, que les surfaces 91 à 93 délimitent un bourrelet 117 qui fait saillie du côté de l'espace 61, sans dépasser la surface 48. Le bourrelet 117 est par ailleurs centré ou à peu près sur la surface 79 qui se situe à la jonction entre la portion crénelée 72 et la portion charnière 73.

De même, on observera que les surfaces 95, 96 et 97 délimitent une portion 71A du bourrelet 71 qui fait saillie du côté de l'espace 61. Les surfaces 80 et 95 sont globalement coplanaires et les surfaces 86 et 97 ont chacune leur pied qui est à peu près à la même distance de l'axe A.

Les surfaces 98 et 100 forment un épaulement 118 (figure 2) adjacent au bourrelet 71, du côté de l'axe A et de l'espace 61.

Les surfaces 101, 102, 106 et 107 délimitent un bourrelet 110 qui se relie d'un côté à une portion 119 intermédiaire située entre le bourrelet 71 et le bourrelet 110, tandis que de l'autre côté, il se relie à un opercule 116 par l'intermédiaire d'une zone frangible 115, la portion intermédiaire 119 étant située entre les surfaces 101 et 105, l'opercule 116 étant situé entre les surfaces 103 et 112 tandis que la zone frangible 115 est située entre les surfaces 102 et 111.

Dans l'exemple illustré, l'épaisseur E1 est de 2,3 mm, l'épaisseur E2 est de 1 mm, l'épaisseur E3 est de 1,2 mm, l'épaisseur E4 est de 1,15 mm, l'épaisseur E5, qui est celle séparant la surface 75 des surfaces 90 et 94 ou la surface 105 de la surface 101, est de 0,5 mm, l'épaisseur E6, qui est celle qui sépare les surfaces 107 et 101, est de 1,05 mm, tandis que l'épaisseur E7, qui est celle de l'opercule 116, est de 0,6 mm. L'embout 1 est moulé d'une seule pièce en matière plastique relativement souple et élastique, ici un élastomère de SBS (Styrène Butylène Styrène).

On remarquera que l'épaisseur de la paroi entre les surfaces 75 et 90, au niveau de la portion charnière 73, est moins importante que celle que la paroi 3 présente entre les surfaces 75 et 92 et que celle que la bague 5 présente autour de la portion charnière 73.

La portion de la paroi comprise entre les surfaces 75 et 90 détermine donc une zone d'affaiblissement de l'embout 1 à la liaison de la paroi 3 et de la bague 5, de telle sorte que pour faire pénétrer un corps tel que le tube 62 à travers l'embout, il suffit d'appuyer très fort sur celui-ci pour que la paroi 3 se désolidarise de la bague 5.

On va maintenant expliquer comment l'on procède à la mise en place d'un câble électrique ou d'un tube dont le diamètre extérieur est compris entre D1 et le petit diamètre de la jupe 41, ici un câble ou un tube dont le diamètre externe est compris entre 8 et 14 mm.

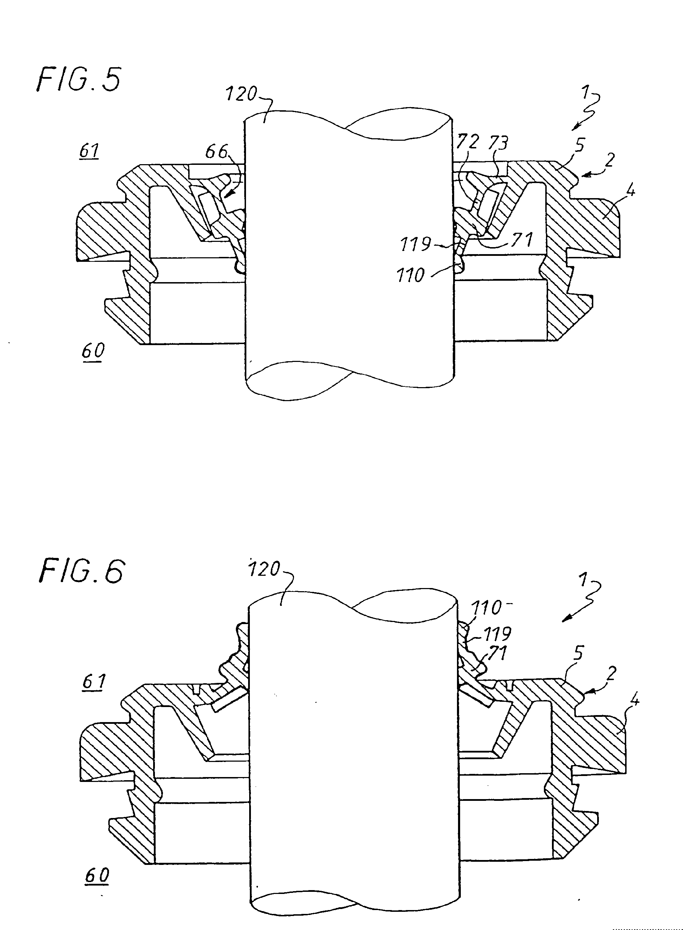

Pour mettre en place un tel câble ou tube, on le dispose dans l'espace 61 coaxialement à l'embout 1, et donc transversalement à la paroi 3, sur laquelle on vient appuyer avec le bout du câble ou tube, avec une force d'intensité suffisante pour provoquer la rupture de la zone frangible 115, et donc le détachement de l'opercule 116, ce qui créé, dans la paroi 3, une ouverture centrale dans laquelle va pouvoir s'engager le tube ou câble qui traverse alors la paroi 3 et qui peut coulisser par rapport à celle-ci jusqu'à ce que la longueur voulue se trouve dans l'espace 60. La figure 5 montre un tel tube ou câble 120 en position, dans l'embout, la paroi 3 étant globalement tronconique.

Dans l'exemple illustré sur cette figure, le bourrelet 110 s'est fortement dilaté, mais sans se déchirer, de sorte qu'il enserre fortement le tube ou câble 120, le bourrelet 71 s'étant quant à lui dilaté moins fortement, mais du fait de ses caractéristiques géométriques, il enserre également très fort le tube ou câble 120, ce qui procure l'étanchéité recherchée.

On notera que la zone crénelée 72, pour prendre la configuration tronconique montrée sur la figure 5 s'est essentiellement dilatée là où elle est le plus mince, c'est-à-dire au niveau des créneaux 76, qui prennent alors une forme de trapèze dont le grand côté est formé par la surface 80, les redents 77 ne se déformant pratiquement pas, du fait qu'ils sont beaucoup plus épais.

Ainsi qu'expliqué précédemment, la portion crénelée, bien qu'elle ait pu se déformer pour accepter le tube ou câble 120, offre une certaine résistance à l'ovalisation du bourrelet 71, qui permet d'éviter l'existence de lacune de contact qui détruirait l'étanchéité.

On notera que dans certaines circonstances, l'ampleur de l'expansion imposée au bourrelet 110 peut créer le déchirement de celui-ci, le déchirement se propageant alors dans la zone intermédiaire 119, jusqu'à l'épaulement 118, qui constitue la première surépaisseur que rencontre la déchirure en train de se constituer, cette surépaisseur stoppant le phénomène, et ceci d'autant plus que l'épaulement 118 créé une surépaisseur particulièrement nette.

On notera que la présence d'une telle déchirure est sans incidence sur l'étanchéité fournie par la paroi 3, l'étanchéité étant fournie par le contact entre le bourrelet 71 et le câble ou tube 120.

On notera par ailleurs que le passage de la paroi 3 de sa configuration de repos où elle est relativement plate à la configuration de travail où elle est tronconique, est facilité par la présence de la portion charnière 73, qui permet à la paroi 3 de plier aisément vis-à-vis du reste de l'embout 1.

Le sens de pénétration du tube ou câble 120 au travers de la paroi 3 ayant été de l'espace externe 61 vers l'espace interne 60, la paroi 3 a sa conicité orientée bien évidemment dans ce sens, ce dont il résulte qu'il existe entre la paroi 3 et le tube ou câble 120, du côté de l'espace 61, un creux dans lequel peuvent s'accumuler des poussières, voire de l'eau, en particulier si l'espace 61 se trouve en haut par rapport à la surface 66 (dans un tel cas, en particulier si la boîte pour appareillage est à l'extérieur, il y aurait, à chaque fois qu'il y a de la pluie, une accumulation d'eau, dont il résulterait une augmentation du risque de pénétration d'eau à l'intérieur de la boîte pour appareillage).

Afin d'éviter une telle augmentation du risque, il suffit de procéder à un léger retrait du tube ou câble 120, c'est-à-dire de procéder à une traction de celui-ci de l'espace 60 vers l'espace 61, jusqu'à avoir retourné la paroi 3, ainsi que montré sur la figure 6.

On notera à cet égard que la conformation donnée au bourrelet 71 et, dans une certaine mesure, celle de la zone intermédiaire 119 et du bourrelet 110, permettent de réaliser relativement aisément le retournement de la paroi 3 vis-à-vis du tube ou câble 120.

On va maintenant expliquer comment l'on met en place dans la paroi 3 un tube ou câble de diamètre compris entre les diamètres D3 et D1, c'est-à-dire, dans l'exemple illustré, entre 3 et 8 mm.

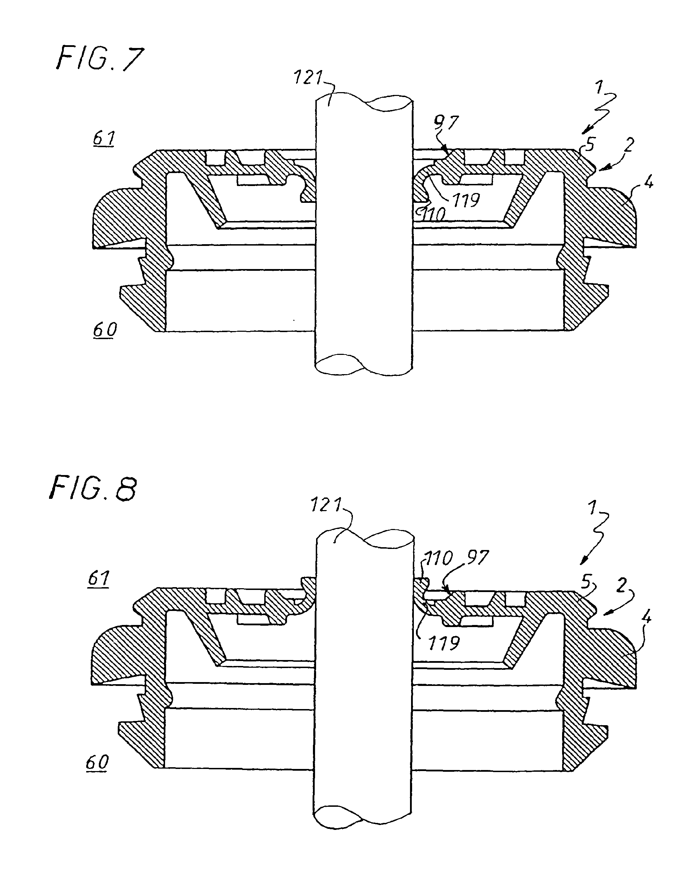

Le tube ou câble, dont le diamètre est compris entre ces valeurs, est présenté, de même que le tube ou câble vu précédemment contre la paroi 3, coaxialement ou à peu près à celle-ci, du côté de l'espace 61, l'appui du tube ou câble sur la paroi 3 bombant celle-ci, jusqu'à ce que se produise la rupture de la zone frangible 115 qui détache l'opercule 116, le tube ou câble pénétrant alors dans l'ouverture ainsi créée. Mais son diamètre étant inférieur au diamètre D1, ce sont essentiellement le bourrelet 110 et la zone intermédiaire 119 qui se déforment, ainsi que montré sur la figure 7.

Dans un tel cas, l'étanchéité est assurée par le bourrelet 110, qui enserre fermement le câble ou tube tel que celui référencé par 121 sur la figure 7.

De même que pour le tube ou câble 120, afin d'éviter l'accumulation de poussière et/ou d'eau susceptible de s'accumuler autour du tube ou câble 121 du fait de la conicité de la paroi 3, on procède à un léger retrait du tube ou câble 121 pour inverser la conicité de la portion de la paroi 3 qui est tronconique, ainsi que montré sur la figure 8, où la zone intermédiaire 119 est sensiblement tronconique.

On observera que pour un tube ou câble tel que le câble 120 ou 121, la surface tronconique 97 procure une aide au positionnement et au centrage lors de la venue en contact du tube ou câble 120 ou 121 avec la paroi 3.

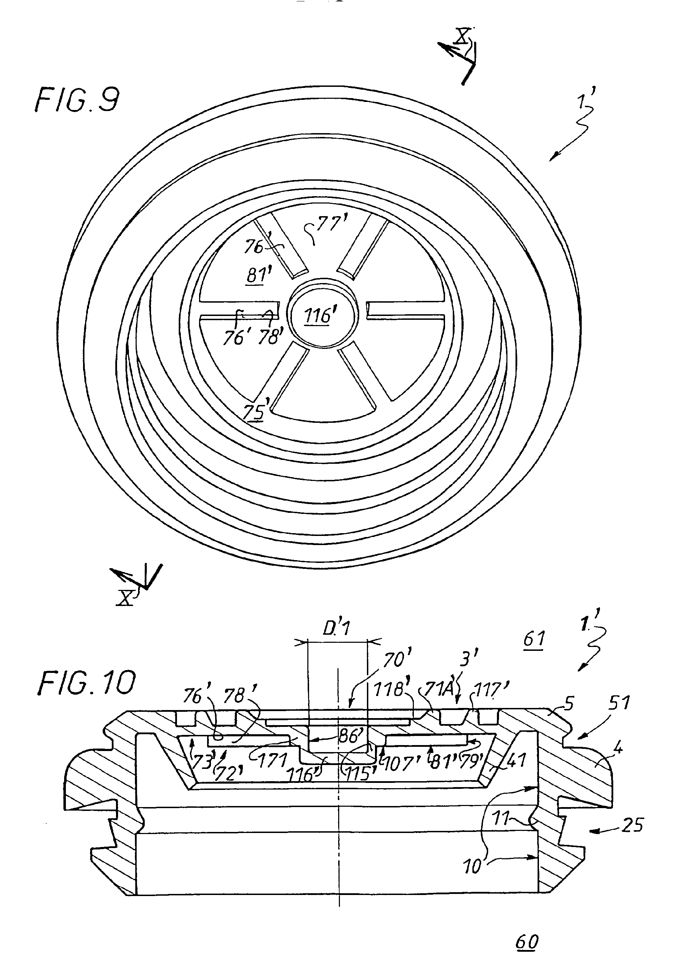

L'embout 1' illustré sur les figures 9 et 10 est similaire à l'embout 1, si ce n'est que l'opercule central 116' est raccordé, par une zone frangible 115', au bourrelet 171 adjacent à la zone crénelée 72' (il n'y a pas, dans l'embout 1', de deuxième bourrelet séparé du bourrelet adjacent à la zone crénelée par une zone intermédiaire).

D'une façon générale, la paroi 3' de l'embout 1' est similaire, pour les autres caractéristiques, à la paroi 3 de l'embout 1, le reste de celui-ci, c'est-à-dire l'embase 2, étant identique à celle de l'embout 1. On a employé pour la paroi 3' de l'embout 1' les mêmes références numériques que pour la paroi 3, affectées d'un indice '.

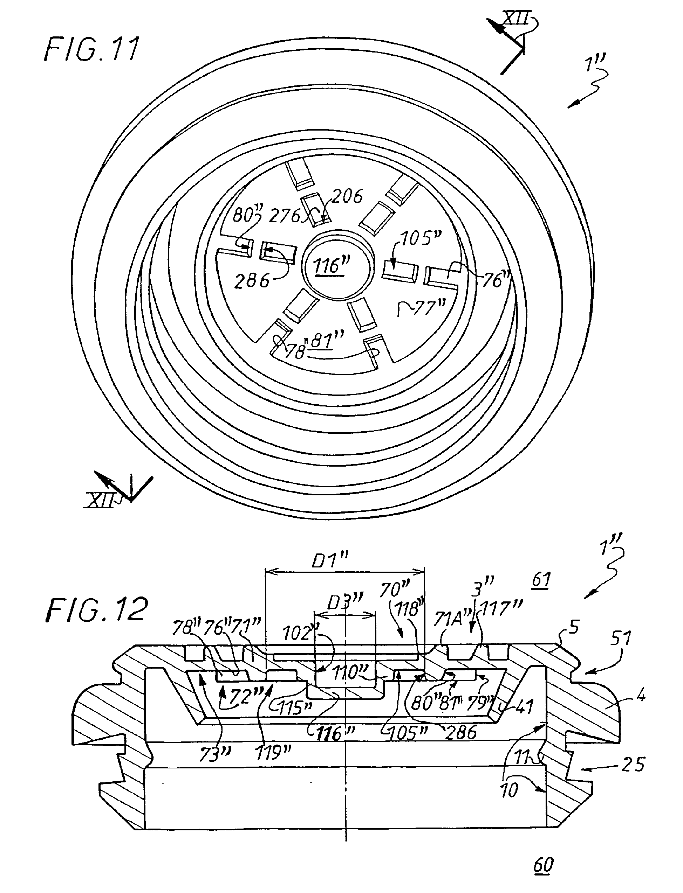

L'embout 1" montré sur les figures 11 et 12 est également similaire à l'embout 1, mais la zone intermédiaire 119" entre les bourrelets 71" et 110" est elle aussi crénelée, les créneaux 276 de la zone intermédiaire 119" étant alignés avec les créneaux 76" de la zone crénelée 72", chacun des créneaux 276 étant délimité à son extrémité interne par une surface 206 du bourrelet 110" et à son extrémité externe une surface 286 du bourrelet 71".

D'une façon générale, on a employé pour la paroi 3" de l'embout 1", les mêmes références numériques que pour la paroi 3, affectées d'un indice ".

Le reste de l'embout 1", c'est-à-dire l'embase 2, est identique à celle des embouts 1 et 1'.

On notera, d'une façon générale, que l'embout 1' peut être intéressant à utiliser dans le cas où on dispose d'une matière souple qui a une propension à la déchirure relativement faible, de sorte que l'on peut compter sur un taux de dilatation du bourrelet 171 relativement important, et que l'embout 1" est intéressant à utiliser lorsqu'il existe, même pour les tubes ou câbles tels que 121, des sollicitations radiales susceptibles d'ovaliser le bourrelet 110".

De nombreuses autres variantes sont possibles en fonction des circonstances, et on notera à cet égard que l'invention ne se limite pas aux exemples décrits et représentés.

On notera que dans le cas de l'embout représenté sur les figures 11 et 12, la surface 81" est plane au niveau du bourrelet 71". En variante, la surface 81" pourrait très bien ne pas être plane au niveau du bourrelet 71", qui serait alors en saillie du côté de l'espace 60. Elle pourrait par exemple présenter une surface bombée dans le prolongement des surfaces 80" d'extrémité interne des créneaux 76" et dans le prolongement des surfaces 286 d'extrémité externe des créneaux 276.

## Revendications

1. Dispositif destiné à être traversé de façon étanche, entre un premier espace (60) et un deuxième espace (61), par un corps cylindrique (120) de diamètre supérieur à un diamètre prédéterminé (D1 ; D'1 ; D1"), **caractérisé en ce qu'**il comporte une paroi (3 ; 3' ; 3") :
- admettant en l'absence dudit corps (120), une position de repos où elle est globalement plate et où elle présente :
• une zone d'introduction (70 ; 70' ; 70") ayant ledit diamètre prédéterminé (D1 ; D1' ; D1"),
• un bourrelet annulaire (71 ; 171 ; 71") entourant ladite zone d'introduction (70 ; 70' ; 70"), et
• une portion crénelée (72 ; 72' ; 72") entourant ledit bourrelet annulaire (71 ; 171 ; 71"), présentant du côté du premier espace (60) des redents (77 ; 77' ; 77") séparés par des créneaux (76 ; 76' ; 76") orientés radialement par rapport à ladite zone d'introduction (70 ; 70' ; 70") et délimités à une extrémité par une surface (80) du bourrelet (71 ; 171 ; 71"), ladite paroi (3 ; 3' ; 3") étant moins épaisse au niveau des créneaux (76 ; 76' ; 76") qu'au niveau des redents (77 ; 77' ; 77") et du bourrelet (71 ; 171 ; 71") ;
et
- adaptée à être déformée élastiquement de ladite position de repos à une position de travail où ladite portion crénelée (72 ; 72' ; 72") est globalement tronconique, lorsque ledit corps (120) est introduit au travers de ladite paroi (3 ; 3' ; 3") par ladite zone d'introduction (70 ; 70' ; 70").

2. Dispositif selon la revendication 1, **caractérisé en ce que** ledit bourrelet (71 ; 71') est délimité latéralement, du côté interne, au moins sur une partie de son épaisseur, par une surface annulaire continue (86 ; 86') ayant ledit diamètre prédéterminé (D1 ; D1').

3. Dispositif selon l'une quelconque des revendications 1 ou 2, **caractérisé en ce que** chaque dit redent (77 ; 77' ; 77") est délimité latéralement du côté externe, au moins sur une partie de son épaisseur, par une surface incurvée (79 ; 79' ; 79") coaxiale à ladite zone d'introduction (70 ; 70' ; 70").

4. Dispositif selon l'une quelconque des revendications 1 à 3, **caractérisé en ce que** dans la position de repos, les surfaces (78 ; 78' ' ; 78") mutuellement en regard de deux redents voisins (77 ; 77' ; 77"), qui délimitent latéralement un créneau (76 ; 76' ; 76"), sont parallèles à une même direction radiale.

5. Dispositif selon l'une quelconque des revendications 1 à 4, **caractérisé en ce que** lesdits créneaux (76 ; 76' ; 76") sont plus étroits que lesdits redents (77 ; 77' ; 77").

6. Dispositif selon l'une quelconque des revendications 1 à 5, **caractérisé en ce qu'**il comporte six créneaux (76 ; 76' ; 76").

7. Dispositif selon l'une quelconque des revendications 1 à 6, **caractérisé en ce que** la surface (81 ; 107' ; 81") dudit bourrelet (71 ; 171 ; 71") et la surface (81 ; 81' ; 81") de chaque redent (77 ; 77' ; 77") qui regardent ledit premier espace (60), se prolongent mutuellement.

8. Dispositif selon l'une quelconque des revendications 1 à 7, **caractérisé en ce que** ledit bourrelet (71 ; 71") comporte, du côté du deuxième espace (61), une nervure annulaire (71A ; 71A") coaxiale à ladite zone d'introduction (70 ; 70").

9. Dispositif selon l'une quelconque des revendications 1 à 8, **caractérisé en ce que** ladite paroi (3 ; 3' ; 3") comporte en outre une portion charnière (73 ; 73' ; 73") entourant ladite portion crénelée (72 ; 72' ; 72") et entourée par le reste dudit dispositif.

10. Dispositif selon la revendication 9, **caractérisé en ce que** la surface (75 ; 75' ; 75") de ladite portion charnière (73 ; 73' ; 73") qui regarde le premier espace (60) est en retrait par rapport à la surface (81 ; 81' ; 81") que comporte chaque redent en regard du premier espace (60).

11. Dispositif selon l'une quelconque des revendications 9 ou 10, **caractérisé en ce que** la surface (75 ; 75' ; 75") de ladite portion charnière (73) et la surface (75 ; 75' ; 75") de chaque dit créneau (76 ; 76' ; 76") qui regardent le premier espace, se prolongent mutuellement.

12. Dispositif selon l'une quelconque des revendications 9 à 11, **caractérisé en ce que** ladite paroi (3 ; 3' ; 3") comporte, du côté du deuxième espace (61), une nervure annulaire (117 ; 117' ; 117") située à la jonction entre ladite portion crénelée (72 ; 72' ; 72") et ladite portion charnière (73 ; 73' ; 73").

13. Dispositif selon l'une quelconque des revendications 1 à 12, **caractérisé en ce que** ladite zone d'introduction (70 ; 70' ; 70") comporte un opercule défonçable (116 ; 116' ; 116").

14. Dispositif selon la revendication 13, **caractérisé en ce que** ledit opercule (116 ; 116' ; 116") est relié par une zone frangible (115 ; 115' ; 115") à un bourrelet (110 ; 171 ; 110") que comporte ladite paroi.

15. Dispositif selon la revendication 14, **caractérisé en ce que** ledit opercule (116 ; 116' ; 116") et ledit bourrelet (110 ; 171 ; 110") auquel il est relié par une zone frangible (115 ; 115' ; 115"), délimitent conjointement, du côté du deuxième espace (61), un creux en forme de cuvette.

16. Dispositif selon la revendication 15, **caractérisé en ce que** ledit opercule (116 ; 116' ; 116") est en saillie par rapport audit bourrelet (110 ; 171 ; 110"), du côté du premier espace (60).

17. Dispositif selon l'une quelconque des revendications 14 à 16, **caractérisé en ce que** ledit bourrelet (71 ; 71") entourant ladite zone d'introduction (70 ; 70"), dit premier bourrelet, est distinct dudit bourrelet (110 ; 110") auquel est relié ledit opercule (116 ; 116") par une zone frangible (115 ; 115"), dit deuxième bourrelet, ladite paroi (3 ; 3") comportant une portion intermédiaire (119' ; 119") entre lesdits premier et deuxième bourrelets.

18. Dispositif selon la revendication 17, **caractérisé en ce que** ledit deuxième bourrelet (110 ; 110") est délimité latéralement, du côté interne, par une surface annulaire continue (102 ; 102") ayant un deuxième diamètre prédéterminé (D3 ; D3"), plus petit que ledit diamètre prédéterminé (D1 ; D1") de ladite zone d'introduction (70, 70").

19. Dispositif selon l'une quelconque des revendications 17 ou 18, **caractérisé en ce que** la surface (105 ; 105") de ladite portion intermédiaire (119' ; 119") qui regarde le premier espace (60) est tout entière en retrait par rapport à la surface (81 ; 81") du premier bourrelet (71 ; 71") et par rapport à la surface (107 ; 107") du deuxième bourrelet qui regardent le premier espace (60).

20. Dispositif selon l'une quelconque des revendications 17 ou 18, **caractérisé en ce que** ladite portion intermédiaire (119") présente du côté du premier espace (60), des redents séparés par des créneaux (276) orientés radialement par rapport à ladite zone d'introduction (70") et délimités à une extrémité par une surface (206) du deuxième bourrelet (110") et à une autre extrémité par une surface (286) du premier bourrelet (71"), ladite portion intermédiaire (119") étant moins épaisse au niveau de ses créneaux (276) qu'au niveau de ses redents et du deuxième bourrelet (110").

21. Dispositif selon la revendication 20, **caractérisé en ce que** lesdits créneaux (76") de ladite portion crénelée et lesdits créneaux (276) de la portion intermédiaire (119"), sont alignés.

22. Dispositif selon l'une quelconque des revendications 17 à 21, **caractérisé en ce que** ladite portion intermédiaire (119 ; 119") comporte, du côté du deuxième espace, un épaulement (118 ; 118") annulaire situé à la jonction avec le premier bourrelet (71 ; 71 ").

23. Dispositif selon l'une quelconque des revendications 13 à 16, **caractérisé en ce que** ledit bourrelet entourant ladite zone d'introduction (70') est celui auquel est relié ledit opercule (116') par une zone frangible (115').

24. Dispositif selon la revendication 23, **caractérisé en ce que** ladite portion crénelée (72') présente un épaulement (118') annulaire du côté du deuxième espace (61).

25. Dispositif selon l'une quelconque des revendications 23 ou 24, **caractérisé en ce que** ladite portion crénelée (72') présente une nervure (71A') annulaire du côté du deuxième espace (61).

26. Dispositif selon l'une quelconque des revendications 1 à 25, **caractérisé en ce qu'**il comporte autour de ladite paroi (3 ; 3' ; 3") une bague plate (5) à laquelle se raccorde, du côté du premier espace, une jupe tronconique (41), ladite paroi (3 ; 3' ; 3") se raccordant à ladite bague (5) par une zone périphérique d'une portion charnière (73 ; 73' ; 73") qui est plus mince que ladite bague (5).

27. Dispositif selon la revendication 26, **caractérisé en ce que** ladite bague (5) se raccorde à un manchon (4) de fixation adapté à être encliqueté au travers d'une ouverture (55) d'une cloison (56) séparant lesdits premier et deuxième espaces.

28. Dispositif selon la revendication 27, **caractérisé en ce qu'**il comporte une rainure (51) située du côté externe, à la jonction entre la bague (5) et le manchon (4).

29. Dispositif selon l'une quelconque des revendications 27 ou 28, **caractérisé en ce que** ledit manchon (4) présente une surface interne cylindrique (10) munie d'un bourrelet annulaire saillant (11).

30. Dispositif selon l'une quelconque des revendications 27 à 29, **caractérisé en ce que** ledit manchon (4) comporte du côté externe, une rainure (25) adaptée à recevoir une portion de ladite cloison (56) située autour de ladite ouverture (55).

31. Dispositif selon l'une quelconque des revendications 1 à 30, **caractérisé en ce qu'**il est en matière plastique moulée d'une seule pièce.

32. Boîte pour appareillage électrique, **caractérisée en ce qu'**elle est munie d'au moins un dispositif selon l'une quelconque des revendications 1 à 31.

33. Procédé pour traverser de façon étanche une cloison séparant un premier et un deuxième espaces avec un corps cylindrique (62 ; 120 ; 121) de diamètre supérieur à un diamètre prédéterminé (D1 ; D1' ; D1"), **caractérisé en ce qu'**on munit ladite cloison (56) d'un dispositif selon l'une quelconque des revendications 1 à 31 et **en ce qu'**on met en place ledit corps (62 ; 120 ; 121) au travers de la paroi de ce dispositif par sa zone d'introduction (70 ; 70' ; 70").

34. Procédé selon la revendication 33, **caractérisé en ce qu'**on met en place ledit corps (62 ; 120 ; 121) en l'enfonçant dudit deuxième espace (61) vers ledit premier espace (60) jusqu'à avoir fait coulisser la longueur voulue au travers de ladite paroi (3 ; 3' ; 3"), puis en tirant en sens inverse jusqu'à avoir inversé la conicité de la portion crénelée (72 ; 72' ; 72").

35. Procédé selon l'une quelconque des revendications 33 ou 34, **caractérisé en ce qu'**il est mis en oeuvre avec ledit corps cylindrique qui est un câble électrique.

## Claims

1. A device through which is intended to pass, in sealed manner, between a first space (60) and a second space (61), a cylindrical body (120) greater in diameter than a given diameter (D1; D'1; D1"), **characterised in that** it comprises a wall (3; 3'; 3"):
- which, in the absence of said body (120), assumes a rest position in which it is substantially flat and has:
■ an insertion zone (70; 70'; 70") of said given diameter (D1; D1'; D1"),
■ an annular collar (71; 171; 71 ") surrounding said insertion zone (70; 70'; 70"), and
■ a notched portion (72; 72'; 72") surrounding said annular collar (71; 171; 71 "), having on the side of the first space (60) projections (77; 77'; 77") separated by notches (76; 76'; 76") oriented radially in relation to said insertion zone (70; 70'; 70") and delimited at one end by a surface (80) of the collar (71; 71'; 71"), said wall (3; 3'; 3 ") being less thick in the region of the notches (76; 76'; 76") than in the region of the projections (77; 77'; 77") and collar (71; 171; 71 "); and
- adapted for elastic deformation from said rest position into an operative position in which said notched portion (72; 72'; 72") is globally frustoconical, when said body (120) is introduced through said wall (3; 3'; 3") via the insertion zone (70; 70'; 70").

2. A device according to Claim 1, **characterised in that** said collar (71; 71") is delimited laterally, on the inner side, at least over part of its thickness, by a continuous annular surface (86; 86') of said given diameter (D1; D1").

3. A device according to either one of Claims 1 or 2, **characterised in that** each of said projections (77; 77'; 77") is delimited laterally, on the outer side, at least over part of the thickness thereof, by an inwardly curved surface (79; 79'; 79") coaxial to said insertion zone (70; 70'; 70").

4. A device according to any one of Claims 1 to 3, **characterised in that** in the rest position the surfaces (78; 78' '; 78") in mutually facing relationship of two adjacent projections (77; 77'; 77"), which laterally delimit a notch (76; 76'; 76"), are parallel in one and the same radial direction.

5. A device according to any one of Claims 1 to 4, **characterised in that** said notches (76; 76'; 76") are narrower than said projections (77; 77'; 77").

6. A device according to any one of Claims 1 to 5, **characterised in that** it comprises six notches (76; 76'; 76").

7. A device according to any one of Claims 1 to 6, **characterised in that** the surface (81; 107'; 81") of said collar (71; 171; 71") and the surface (81; 81'; 81") of each projection (77; 77'; 77") facing said first space (60) are mutual extensions of each other.

8. A device according to any one of Claims 1 to 7, **characterised in that** said collar (71; 71 ") comprises, on the side of the second space (61), an annular rib (71 A; 71 A") coaxial to said insertion zone (70; 70").

9. A device according to any one of Claims 1 to 8, **characterised in that** said wall (3; 3'; 3") further comprises a hinge portion (73; 73'; 73") surrounding said notched portion (72; 72'; 72") and surrounded by the remainder of said device.

10. A device according to Claim 9, **characterised in that** the surface (75; 75'; 75") of said hinge portion (73; 73'; 73") facing the first space (60) is offset from the surface (81; 81'; 81") of each projection in facing relationship with the first space (60).

11. A device according to either one of Claims 9 or 10, **characterised in that** the surface (75; 75'; 75") of said hinge portion (73) and the surface (75; 75'; 75") of each of said notches (76; 76'; 76") facing the first space, are mutual extensions of each other.

12. A device according to any one of Claims 9 to 11, **characterised in that** said wall (3; 3'; 3") comprises, on the side of the second space (61), an annular rib (117; 117'; 117") located at the junction between said notched portion (72; 72'; 72") and said hinge portion (73; 73'; 73").

13. A device according to any one of Claims 1 to 12, **characterised in that** said insertion zone (70; 70'; 70") comprises a breakable cover (116; 116'; 116").

14. A device according to Claim 13, **characterised in that** said cover (116; 116'; 116") is connected by way of a breakable zone (115; 115'; 115") to a collar (110; 171; 110") provided on said wall.

15. A device according to Claim 14, **characterised in that** said cover (116; 116'; 116") and said collar (110; 171; 110") to which it is connected by way of a breakable zone (115; 115'; 115") together define, on the side of the second space (61), a cup-shaped hollow.

16. A device according to Claim 15, **characterised in that** on the side of the first space (60) said cover (116; 116'; 116") projects from said collar (110; 171; 110").

17. A device according to any one of Claims 14 to 16, **characterised in that** said collar (71; 71 ") surrounding said insertion zone (70; 70"), called the first collar, is separate from said collar (110; 110"), called the second collar, to which said cover (116; 116") is connected by a breakable zone (115; 115"), said wall (3; 3") comprising an intermediate portion (119'; 119") between said first and second collars.

18. A device according to Claim 17, **characterised in that** said second collar (110; 110") is delimited laterally, on the inner side, by a continuous annular surface (102; 102") of a second given diameter (D3; D3") which is less than said given diameter (D1; D1") of said insertion zone (70, 70").

19. A device according to either one of Claims 17 or 18, **characterised in that** the surface (105; 105") of said intermediate portion (119'; 119") which is facing the first space (60) is completely offset from the surface (81; 81") of said first collar (71; 71 ") and from the surface (107; 107") of the second collar which faces the first space (60).

20. A device according to either one of Claims 17 or 18, **characterised in that** said intermediate portion (119") has, on the side of the first space (60), projections which are separated by notches (276) oriented radially relative to said insertion zone (70") and delimited at one end by a surface (206) of the second collar (110") and at another end by a surface (286) of the first collar (71 "), said intermediate portion (119") being less thick at the location of the notches (276) thereof than at the location of the projections thereof and second collar (110").

21. A device according to Claim 20, **characterised in that** said notches (76") of said notched portion and said notches (276) of the intermediate portion (119") are aligned.

22. A device according to any one of Claims 17 to 21, **characterised in that** said intermediate portion (119; 119") comprises, on the side of the second space, an annular shoulder (118; 118") disposed at the junction with the first collar (71; 71").

23. A device according to any one of Claims 13 to 16, **characterised in that** said collar surrounding said insertion zone (70') is that to which said cover (116') is connected by way of a breakable zone (115').

24. A device according to Claim 23, **characterised in that** said notched portion (72') has an annular shoulder (118') on the side of the second space (61).

25. A device according to either one of Claims 23 or 24, **characterised in that** said notched portion (72') has an annular rib (71A') on the side of the second space (61).

26. A device according to any one of Claims 1 to 25, **characterised in that** it comprises around said wall (3; 3'; 3") a flat ring (5) to which is joined, on the side of the first space, a frustoconical skirt (41), said wall (3; 3'; 3") being connected to said ring (5) by means of a peripheral zone of a hinge portion (73; 73'; 73") which is thinner than said ring (5).

27. A device according to Claim 26, **characterised in that** said ring (5) is joined to a fixing sleeve (4) capable of being snapped through an opening (55) in a partition (56) separating said first and second spaces.

28. A device according to Claim 27, **characterised in that** it comprises a groove (51) disposed on the outer side, at the junction between the ring (5) and the sleeve (4).

29. A device according to either one of Claims 27 or 28, **characterised in that** said sleeve (4) has a cylindrical inner surface (10) provided with a projecting annular collar (11).

30. A device according to any one of Claims 27 to 29, **characterised in that** said sleeve (4) comprises, on the outer side, a groove (25) capable of receiving a portion of said partition (56) disposed around said opening (55).

31. A device according to any one of Claims 1 to 30, **characterised in that** it is made of plastics material moulded from one single piece.

32. A box for electrical equipment, **characterised in that** it is equipped with at least one device according to any one of Claims 1 to 31.

33. A process for passing sealingly through a partition separating a first space and a second space a cylindrical body (62; 120; 121) greater in diameter than a given diameter (D1; D1'; D1"), **characterised in that** said partition (56) is equipped with a device according to any one of Claims 1 to 31, and **in that** said body (62; 120; 121) is placed through the wall of that device via the insertion zone (70; 70'; 70") thereof.

34. A process according to Claim 33, **characterised in that** said body (62; 120; 121) is put in place by being thrust from said second space (61) towards said first space (60) until it has been made to slide the desired length through said wall (3; 3'; 3"), then by it being pulled in the opposite direction until the conicity of the notched portion (72; 72'; 72") has been inverted.

35. A process according to either one of Claims 33 or 34, **characterised in that** it is implemented with said cylindrical body which is an electric cable.

## Patentansprüche

1. Vorrichtung, die dazu bestimmt ist, von einem zylindrischen Körper (120), dessen Durchmesser größer ist als ein vorbestimmter Durchmesser (D1; D1'; D1"), zwischen einem ersten Raum (60) und einem zweiten Raum (61) in dichter Weise durchquert zu werden,
**dadurch gekennzeichnet, dass** sie eine Wand (3; 3'; 3") aufweist,
- die bei Fehlen des Körpers (120) eine Ruhestellung aufweist, in der sie allgemein eben ist und in der sie
• einen Einsteckbereich (70; 70'; 70") mit dem vorbestimmten Durchmesser (D1; D1'; D1"),
• eine den Einsteckbereich (70; 70'; 70") umgebende ringförmige Wulst (71; 171, 71") und
• einen die ringförmige Wulst (71; 171; 71") umgebenden gezackten Abschnitt (72; 72', 72") aufweist, der auf der Seite des ersten Raums (60) Zacken (77; 77'; 77") aufweist, die durch Einschnitte (76; 76'; 76") voneinander getrennt sind, die bezüglich des Einsteckbereichs (70; 70'; 70") radial ausgerichtet und an einem Ende von einer Fläche (80) der Wulst (71; 171; 71") begrenzt sind, wobei die Dicke der Wand (3; 3'; 3") in Höhe der Einschnitte (76; 76'; 76") geringer ist als in Höhe der Zacken (77; 77'; 77") und der Wulst (71; 171; 71");
und
- die elastisch von der Ruhestellung in eine Arbeitsstellung verformt zu werden vermag, in welcher der gezackte Abschnitt (72; 72'; 72") allgemein kegelstumpfartig ist, wenn der Körper durch die Wand (3; 3'; 3") hindurch mithilfe dieses Einsteckbereichs (70; 70'; 70") eingesteckt wird.

2. Vorrichtung nach Anspruch 1,
**dadurch gekennzeichnet, dass** die Wulst (71; 71') an der Innenseite, wenigstens in einem Teil ihrer Dicke, durch eine den vorbestimmten Durchmesser (D1; D1') aufweisende, kontinuierliche ringförmige Fläche (86; 86') seitlich begrenzt ist.

3. Vorrichtung nach einem der Ansprüche 1 oder 2,
**dadurch gekennzeichnet, dass** jede Zacke (77; 77'; 77") an der Außenseite, wenigstens in einem Teil ihrer Dicke, durch eine gebogene, zum Einsteckbereich (70; 70'; 70") koaxiale Fläche (79; 79'; 79") seitlich begrenzt ist.

4. Vorrichtung nach einem der Ansprüche 1 bis 3,
**dadurch gekennzeichnet, dass** die sich bezüglich einander gegenüberliegenden Flächen (78; 78'; 78") zweier benachbarter Zacken (77; 77'; 77"), die seitlich einen Einschnitt (76; 76'; 76") begrenzen, in der Ruhestellung in einer radialen Richtung zueinander parallel sind.

5. Vorrichtung nach einem der Ansprüche 1 bis 4,
**dadurch gekennzeichnet, dass** die Einschnitte (76; 76'; 76") schmäler sind als die Zacken (77; 77'; 77").

6. Vorrichtung nach einem der Ansprüche 1 bis 5,
**dadurch gekennzeichnet, dass** sie sechs Einschnitte (76; 76'; 76") aufweist.

7. Vorrichtung nach einem der Ansprüche 1 bis 6,
**dadurch gekennzeichnet, dass** sich die Fläche (81; 107'; 81") der Wulst (71; 71'; 71") und die Fläche (81; 81'; 81") einer jeden Zacke (77; 77'; 77"), die zum ersten Raum (60) gerichtet sind, gegenseitig fortsetzten.

8. Vorrichtung nach einem der Ansprüche 1 bis 7,
**dadurch gekennzeichnet, dass** die Wulst (71; 71") auf der Seite des zweiten Raums (61) eine ringförmige, zum Einsteckbereich (70; 70") koaxiale Rippe (71A; 71A") aufweist.

9. Vorrichtung nach einem der Ansprüche 1 bis 8,
**dadurch gekennzeichnet, dass** die Wand (3; 3'; 3") ferner einen den gezackten Abschnitt (72; 72'; 72") umgebenden und vom übrigen Teil der Vorrichtung umgebenen Verbindungsabschnitt (73; 73'; 73") aufweist.

10. Vorrichtung nach Anspruch 9,
**dadurch gekennzeichnet, dass** die Fläche (75; 75'; 75") des Verbindungsabschnitts (73; 73'; 73"), die zum ersten Raum (60) gerichtet ist, bezüglich der Fläche (81; 81'; 81") zurückversetzt ist, die jede Zacke dem ersten Raum (60) gegenüberliegend umfasst.

11. Vorrichtung nach einem der Ansprüche 9 oder 10,
**dadurch gekennzeichnet, dass** sich die Fläche (75; 75'; 75") des Verbindungsabschnitts (73) und die Fläche (75; 75'; 75") eines jeden Einschnitts (76; 76'; 76"), die zum ersten Raum gerichtet sind, gegenseitig fortsetzen.

12. Vorrichtung nach einem der Ansprüche 9 bis 11,
**dadurch gekennzeichnet, dass** die Wand (3; 3'; 3") auf der Seite des zweiten Raums (61) eine ringförmige Rippe (117; 117'; 117") aufweist, die an der Verbindung zwischen dem gezackten Abschnitt (72; 72'; 72") und dem Verbindungsabschnitt (73; 73'; 73") angeordnet ist.

13. Vorrichtung nach einem der Ansprüche 1 bis 12,
**dadurch gekennzeichnet, dass** der Einsteckbereich (70; 70'; 70") einen eindrückbaren Deckel (116; 116'; 116") aufweist.

14. Vorrichtung nach Anspruch 13,
**dadurch gekennzeichnet, dass** der Deckel (116; 116', 116") durch einen zerbrechbaren Bereich (115, 115', 115") mit einer Wulst (110; 171; 110") verbunden ist, welche die Wand aufweist.

15. Vorrichtung nach Anspruch 14,
**dadurch gekennzeichnet, dass** der Deckel (116; 116'; 116") und die Wulst (110; 171; 110"), mit der dieser durch einen zerbrechbaren Bereich (115; 115'; 115") verbunden ist, gemeinsam auf der Seite des zweiten Raums (61) eine schalenförmige Vertiefung begrenzen.

16. Vorrichtung nach Anspruch 15,
**dadurch gekennzeichnet, dass** der Deckel (116; 116', 116") bezüglich der Wulst (110; 171; 110") auf der Seite des ersten Raums (60) vorsteht.

17. Vorrichtung nach einem der Ansprüche 14 bis 16,
**dadurch gekennzeichnet, dass** die als erste Wulst bezeichnete, den Einsteckbereich (70; 70") umgebende Wulst (71; 71") von der als zweite Wulst bezeichneten Wulst (110; 110"), mit der der Deckel (116; 116") durch einen zerbrechbaren Bereich (115; 115") verbunden ist, unabhängig ist, wobei die Wand (3; 3") zwischen der ersten und der zweiten Wulst ein Zwischenstück (119'; 119") aufweist.

18. Vorrichtung nach Anspruch 17,
**dadurch gekennzeichnet, dass** die zweite Wulst (110; 110") auf der Innenseite durch eine kontinuierliche ringförmige Fläche (102; 102") seitlich begrenzt ist, die einen zweiten vorbestimmten Durchmesser (D3; D3") hat, der kleiner ist als der vorbestimmte Durchmesser (D1; D1") des Einsteckbereichs (70; 70").

19. Vorrichtung nach einem der Ansprüche 17 oder 18,
**dadurch gekennzeichnet, dass** die Fläche (105; 105") des Zwischenstücks (119'; 119"), die zum ersten Raum (60) gerichtet ist, bezüglich der Fläche (81; 81") der zweiten Wulst (71; 71") und bezüglich der Fläche (107; 107") der zweiten Wulst, die zum ersten Raum (60) gerichtet ist, vollständig zurückversetzt ist.

20. Vorrichtung nach einem der Ansprüche 17 oder 18,
**dadurch gekennzeichnet, dass** das Zwischenstück (119") auf der Seite des ersten Raums (60) Zacken aufweist, die durch Einschnitte (276) voneinander getrennt sind, die bezüglich des Einsteckbereichs (70") radial ausgerichtet und an einem Ende durch eine Fläche (206) der zweiten Wulst (110") und an dem anderen Ende durch eine Fläche (286) der ersten Wulst (71") begrenzt sind, wobei die Dicke des Zwischenstücks (119") in Höhe seiner Einschnitte (276) geringer ist als in Höhe seiner Zacken und der zweiten Wulst (110").

21. Vorrichtung nach Anspruch 20,
**dadurch gekennzeichnet, dass** die Einschnitte (76") des gezackten Abschnitts und die Einschnitte (276) des Zwischenstücks (119") in einer Reihe angeordnet sind.

22. Vorrichtung nach einem der Ansprüche 17 bis 21,
**dadurch gekennzeichnet, dass** das Zwischenstück (119; 119") auf der Seite des zweiten Raums einen ringförmigen Absatz (118; 118") aufweist, der an der Verbindung mit der ersten Wulst (71; 71") angeordnet ist.

23. Vorrichtung nach einem der Ansprüche 13 bis 16,
**dadurch gekennzeichnet, dass** es sich bei der den Einsteckbereich (70') umgebenden Wulst um diejenige handelt, die mit dem Deckel (116') durch einen zerbrechbaren Bereich (115') verbunden ist.

24. Vorrichtung nach Anspruch 23,
**dadurch gekennzeichnet, dass** der gezackte Abschnitt (72') einen ringförmigen Absatz (118') auf der Seite des zweiten Raums (61) aufweist.

25. Vorrichtung nach einem der Ansprüche 23 oder 24,
**dadurch gekennzeichnet, dass** der gezackte Abschnitt (72') eine ringförmige Rippe (71A') auf der Seite des zweiten Raums (61) aufweist.

26. Vorrichtung nach einem der Ansprüche 1 bis 25,
**dadurch gekennzeichnet, dass** sie um die Wand (3; 3'; 3") herum einen flachen Ring (5) aufweist, an den eine kegelstumpfartige Schürze (41) auf der Seite des ersten Raums anschließt, wobei die Wand (3; 3'; 3") an den Ring (5) durch einen Randbereich eines Verbindungsabschnitts (73; 73'; 73"), der dünner ist als der Ring (5), anschließt.

27. Vorrichtung nach Anspruch 26,
**dadurch gekennzeichnet, dass** der Ring (5) an eine Befestigungshülse (4) anschließt, die durch eine Öffnung (55) einer den ersten und den zweiten Raum voneinander trennenden Wand (56) hindurch eingerastet zu werden vermag.

28. Vorrichtung nach Anspruch 27,
**dadurch gekennzeichnet, dass** sie eine Nut (51) aufweist, die an der Außenseite an der Verbindung zwischen dem Ring (5) und der Hülse (4) angeordnet ist.

29. Vorrichtung nach einem der Ansprüche 27 oder 28,
**dadurch gekennzeichnet, dass** die Hülse (4) eine zylindrische Innenfläche (10) aufweist, die mit einer vorspringenden ringförmigen Wulst (11) versehen ist.

30. Vorrichtung nach einem der Ansprüche 27 bis 29,
**dadurch gekennzeichnet, dass** die Hülse (4) an der Außenseite eine Nut (25) aufweist, die ein Stück der um die Öffnung (55) herum angeordneten Wand (56) aufzunehmen vermag.

31. Vorrichtung nach einem der Ansprüche 1 bis 30,
**dadurch gekennzeichnet, dass** sie aus einem in einem Stück gegossenen Kunststoff besteht.

32. Dose für elektrische Installationsgeräte,
**dadurch gekennzeichnet, dass** sie mit wenigstens einer Vorrichtung nach einem der Ansprüche 1 bis 31 ausgestattet ist.

33. Verfahren zum dichten Durchqueren einer einen ersten und einen zweiten Raum voneinander trennenden Wand mit einem zylindrischen Körper (62; 120; 121), dessen Durchmesser größer ist als ein vorbestimmter Durchmesser (D1; D1'; D1"),
**dadurch gekennzeichnet, dass** die Wand (56) mit einer Vorrichtung nach einem der Ansprüche 1 bis 31 versehen wird, und dass der Körper (62; 120; 121) durch die Wand dieser Vorrichtung hindurch mithilfe von deren Einsteckbereich (70; 70'; 70") angebracht wird.

34. Verfahren nach Anspruch 33,
**dadurch gekennzeichnet, dass** der Körper (62; 120; 121) dadurch angebracht wird, dass er vom zweiten Raum (61) zum ersten Raum (60) soweit eingesteckt wird, bis die gewünschte Länge durch die Wand (3; 3'; 3") hindurch geschoben ist, und dann in entgegengesetzter Richtung gezogen wird, bis die Konizität des gezackten Abschnitts (72; 72'; 72") umgekehrt ist.

35. Verfahren nach einem der Ansprüche 33 oder 34,
**dadurch gekennzeichnet, dass** es mit dem zylindrischen Körper durchgeführt wird, bei dem sich um ein Stromkabel handelt.
